(19) Europäisches Patentamt
European Patent Office
Office européen des brevets

(11) Veröffentlichungsnummer: **0 240 918**
**B1**

(12) # EUROPÄISCHE PATENTSCHRIFT

(45) Veröffentlichungstag der Patentschrift: **02.05.90**

(51) Int. Cl.5: **C 07 F 9/38,** A 61 K 31/66

(21) Anmeldenummer: **87104805.4**

(22) Anmeldetag: **28.03.87**

(54) **Diphosphonylierte Oxonitrile, Verfahren zu ihrer Herstellung und ihre Verwendung in mikrobistatischen Zusammensetzungen sowie mikrobistatisch wirksame, diphosphonylierte Oxonitrile enthaltende Zusammensetzungen.**

(30) Priorität: **05.04.86 DE 3611522**

(43) Veröffentlichungstag der Anmeldung:
**14.10.87 Patentblatt 87/42**

(45) Bekanntmachung des Hinweises auf die Patenterteilung:
**02.05.90 Patentblatt 90/18**

(84) Benannte Vertragsstaaten:
**DE**

(56) Entgegenhaltungen:
**DE-B-2 754 821**
**DE-C-1 225 818**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Blum, Helmut**
**Bertha-von-Suttner-Strasse 30**
**D-4000 Düsseldorf (DE)**
Erfinder: **Hemmann, Siglinde**
**Kantstrasse 28**
**D-4005 Meerbusch 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 240 918 B1

**Beschreibung**

Die Erfindung betrifft durch Diphosphonylierung von Oxonitrilen erhältliche 3-Alkyl-3-oxo-1-amino-propan-1.1-diphosphonsäuren und ihre wasserlöslichen Salze, Verfahren zu ihrer Herstellung und ihre Verwendung in mikrobistatischen Zusammensetzungen sowie die mikrobistatisch wirksamen, die genannten diphosphonylierten Derivate enthaltenden Zusammentsetzungen.

1-Amino-1.1-diphosphonsäuren der nachfolgenden allgemeinen Formel (I)

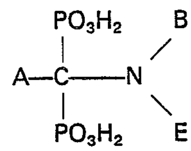

(I)

in der A, B und E für aliphatische, cycloaliphatische oder aromatische Kohlenwasserstoffreste stehen und B und E zusätzlich auch für ein H-Atom stehen können, sind aus dem Stand der Technik bekannt. Sie werden durch Umsetzung von Nitrilen mit Phosphortrihalogeniden und anschließende Hydrolyse bzw. Alkoholyse (DE—B—10 02 355), Umsetzung von Nitrilen mit Phosphoriger Säure (DE—A—26 25 767) oder Umsetzung von Carbonsäureamiden mit Phosphortrihalogeniden bei Zusatz von Phosphoriger Säure und anschließende Hydrolyse (DE—A—19 58 123) hergestellt. Phosphonsäuren der oben genannten allgemeinen Formel (I) besitzen die Fähigkeit, Schwermetallionen und Erdalkalimetallionen zu komplexieren. Sie werden daher verbreitet als Komplexbildner bzw. Chelatbildner in der Wasserenthärtung, der Waschmittelherstellung, auf dem Textilsektor bzw. in der Papierherstellung verwendet. In der DE—B—10 02 355 ist außerdem ihre Verwendung in Pharmazeutika und Schädlingsbekämpfungsmitteln erwähnt.

Aus dem Stand der Technik ist es jedoch nicht bekannt, daß derartige Phosphonsäuren mikrobistatische Eigenschaften aufweisen.

Zur Verwendung im pharmazeutischen Bereich sind ferner strukturverwandte Verbindungen der allgemeinen Formel (II) geeignet, die ebenfalls als Komplexbildner bekannt sind:

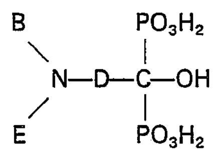

(II)

In (II) stehen B und E für Wasserstoff oder aliphatische oder aromatische Reste in Analogie zur oben genannten allgemeinen Formel (I), während D für einen Alkylenrest mit 1 bis 5 C-Atomen steht. In den DE—A—24 05 254 und 25 34 391 wird die Verwendung von Verbindungen der allgemeinen Formel (II) sowie deren wasserlöslicher Salze in der Prophylaxe und der therapeutischen Behandlung von Störungen des Calcium-bzw. Phosphatstoffwechsels im menschlichen und tierischen Körper beschrieben.

Es wurde nun überraschend gefunden, daß durch Phosphonylierung von Oxonitrilen neue Verbindungen erhältlich sind und diese Verbindungen unerwartet gute mikrobistatische Eigenschaften aufweisen und daher in geeigneten Zusammensetzungen zur Hemmung des Keimwachstums verwendet werden können.

Die Erfindung betrifft 3-Alkyl-3-oxo-1-aminopropan-1.1.-diphosphonsäuren und ihre wasserlöslichen Salze der allgemeinen Formel (III)

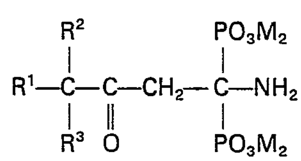

(III)

in der $R^1$ für unverzweigte oder verzweigte Alkylreste mit 1 bis 8 C-Atomen, $R^2$ und $R^3$ unabhängig voneinander für Methyl oder Ethyl stehen und M H oder das Kation einer wasserlöslichen Base sein kann.

Die Erfindung betrifft außerdem ein Verfahren zur Herstellung der Verbindungen der allgemeinen Formel (III) in der $R^1$ für unverzweigte oder verzweigte Alkylreste mit 1 bis 8 C-Atomen, $R^2$ und $R^3$ unabhängig voneinander für Methyl oder Ethyl und M für H oder das Kation einer wasserlöslichen Base stehen, das dadurch gekennzeichnet ist, daß man — gegebenenfalls in Gegenwart eines oder mehrerer

organischer Lösungsmittel — bei Temperaturen im Bereich von 0 bis 100°C ein Oxonitril der allgemeinen Formel (IV)

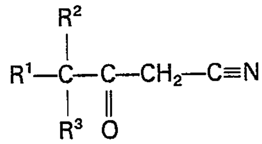
(IV)

in der $R^1$, $R^2$ und $R^3$ die oben angegebenen Bedeutungen haben können, entweder mit Mischungen von Phosphortrihalogeniden $PX_3$, in denen X für F, Cl oder Br steht, mit Phosphoriger Säure, wobei das Molverhältnis der Phosphonylierungspartner im Bereich von 2:1 bis 1:2 liegt, oder mit Produkten der Umsetzung von Phosphortrihalogeniden $PX_3$ mit Wasser umsetzt, in denen das Phosphortrihalogenid soweit hydrolysiert ist, daß ein $PX_3$-/$H_3PO_3$-Gemisch im Molverhältnis 2:1 bis 1:2 vorliegt. Die Reaktionsmischung wird mit einem Überschuß an Wasser versetzt. Gegebenenfalls werden anschließend die Reaktionsprodukte der allgemeinen Formela (III), in der M für H steht, in an sich bekannter Weise durch Zugabe basischer Reaktionspartner der Formel $M^{\oplus}OH^{\ominus}$, worin $M^{\oplus}$ für ein Alkalimetall- oder Ammoniumkation $R^4R^5R^6R^7N^{\oplus}$ steht, in dem $R^4$, $R^5$, $R^6$ und $R^7$ unabhängig voneinander Wasserstoff oder ein verzweigter oder unverzweigter Alkylrest mit 1 bis 12 C-Atomen sein können, in Verbindungen der Formel (III), überführt, in der M für ein Alkalimetall- oder Ammoniumkation der genannten Bedeutung steht. Die erhaltenen Verbindungen der Formel (III) werden nach an sich bekannten Methoden isoliert und gereinigt.

Die Erfindung betrifft außerdem die Verwendung der Verbindung der allgemeinen Formel (III) in mikrobistatisch wirksamen Mitteln neben üblichen Träger- und Hilfsstoffen.

Die Erfindung betrifft ferner Zusammensetzungen, die eine oder mehrere Verbindungen der allgemeinen Formel (III) mit den oben angegebenen Bedeutungen für $R^1$, $R^2$, $R^3$ und M in mikrobistatisch wirksamen Konzentrationen neben üblichen Träger- und Hilfsstoffen enthalten.

Die erfindungsgemäßen neuen Verbindungen der oben angegebenen allgemeinen Formel (III) lassen sich — je nach Substituenten $R^1$, $R^2$, $R^3$ und M — als 3-Alkyl-3-oxo-1-aminopropan-1.1.-diphosphonsäuren bzw. deren Salze bezeichnen. In der allgemeinen Formel (II) kann $R^1$ für unverzweigte oder verzweigte Alkylreste mit 1 bis 8 C-Atomen stehen. Als solche kommen Reste aus der Gruppe Methyl, Ethyl, n-Propyl, i-Propyl, n-Butyl sec-Butyl, tert-Butyl, sowie n-Pentyl, n-Hexyl, n-Heptyl und n-Octyl sowie deren verzweigte Isomere in Frage. Bevorzugt steht $R^1$ für unverzweigte Alylreste mit 3 bis 6 C-Atomen.

Die Reste $R^2$ und $R^3$ in der oben angegebenen allgemeinen Formel (III) können unabhängig voneinander Methyl oder Ethyl sein. Bevorzugt sind die beiden Reste $R^2$ und $R^3$ identisch. Besonders bevorzugt sind erfindungsgemäß Verbindungen (III), in denen beide Reste $R^2$ und $R^3$ für Methyl stehen.

Mikrobistatisch wirksam und damit auch Gegenstand der Erfindung sind Verbindungen der oben angegebenen allgemienen Formel (III), in der M statt des Protons für die freien Säuren auch für Alkalimetall-Kationen oder ein Ammoniumkation der allgemeinen Formel $R^4R^5R^6R^7N^{\oplus}$ stehen kann. Ein wesentlicher Vorteil dieser von den freien Säuren abgeleiteten Salze ist es, daß sie die Wasserlöslichkeit der Verbindungen der allgemeinen Formel (III), in der M für H steht, deutlich verbesern. Damit wird natürlich die Verwendbarkeit derartiger Verbindungen in mikrobistatischen Mitteln ebenfalls verbessert. Als Alkalimetall-Kationen kommen erfindungsgemäß insbesondere Kationen wie $Na^{\oplus}$ oder $K^{\oplus}$ in Frage. M kann jedoch aush für Ammoniumkationen der obigen allgemeinen Struktur stehen, in der $R^4$, $R^5$, $R^6$ und $R^7$ unabhängig voneinander Wasserstoff oder verzweigte oder unverzweigte Alkylreste mit 1 bis 12 C-Atomen sein können. Als Alkylreste kommen damit alle verzweigten und unverzweigten Reste aus der Gruppe Methyl, Ethyl, Propyl, Butyl, Pentyl, Hexyl, Heptyl, Octyl, Nonyl, Decyl, Undecyl und Dodecyl in Frage.

Als wasserlösliche Salze werden erfindungsgemäß Alkalimetallsalze der allgemeinen Formel (III) bevorzugt, in der M für ein Alkalimetall-Kation steht. Besonders bevorzugt sind die Natriumsalze.

Die genannten Verbindungen der allgemeinen Formel (III) werden analog zu bekannten Verfahren hergestellt. Dies geschieht erfindungsgemäß durch Phosphonylierung von Oxonitrilen der allgemeinen Formel (IV)

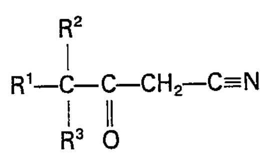
(IV)

in der $R^1$, $R^2$ und $R^3$ die oben genannten Bedeutungen haben können, mit Mischungen von Phosphortrihalongeniden $PX_3$ (mit X = F, Cl, Br) mit Phosphoriger Säure, wobei das Molverhältnis der Phosphonylierungspartner im Bereich von 2:1 bis 1:2 liegt, bevorzugt jedoch 1:1 ist. Mit Vorteil wird $PBr_3$ als Phosphortrihalogenid für das erfindungsgemäße Verfahren verwendet. Eine vergleichbare Reaktion wird in der DE—A—19 58 123 beschrieben.

Anstelle einer Mischung von Phosphortrihalogenid und Phosphoriger Säure kann auch ein Umsetzungsprodukt von Phosphortrihalogenid mit Wasser verwendet werden, wenn dich sich bei der Umsetzung ergebenden Mengen so sind, daß formal ein Gemisch von Phosphortrihalogenid und Phosphoriger Säure

beispielsweise im Molverhältnis 1:1 vorliegt. Dies kann beispielsweise dadurch erreicht werden, daß man Mischungen von Phosphortrihalogenid, beispielsweise Phosphortribromid, und Wasser im Molverhältnis 2:3 einsetzt, in denen ein Mol $PX_3$ zu Phosphoriger Säure hydrolysiert wird, während das andere für die Phosphonylierung des Oxonitrils (III) verfügbar ist.

Die Phosphonylierungsreaktion kann in Abwesenheit oder in Gegenwart eines oder mehrerer organischer Lösungsmittel durchgeführt werden. Als solche kommen Dioxan, Chlorbenzol, Glykoldimethylether, halogenierte Kohlenwasserstoffe wie Tetrachlorkohlenstoff oder Ethantetrachlorid, etc. in Frage. Die Reaktionstemperaturen bewegen sich zweckmäßigerweise im Bereich von 0 bis 100°C, vorzugsweise im Bereich von 45 bis 90°C. Bei der Durchführung wird im allgemeinen das Oxonitril der allgemeinen Formel, (IV) in einem der genannten organischen Lösungsmittel vorgelegt und anschließend nacheinander oder gleichzeitig die Phosphorige Säure und das Phosphortrihalogenid bzw. Phosphortrihalogenid und Wasser nacheinander eingetragen. Die Reaktionsmischung wird über einen gewissen Zeitraum, beispielsweise drei bis sieben Stunden, in dem angegebenen Temperaturbereich gerührt. Anschließend erfolgt die Hydrolyse mit einem Überschuß an Wasser.

Die erhaltenen Reaktionsprodukte der allgemeinen Formel (III), in der M für H steht, werden dann gegebenenfalls durch Zugabe basischer Reaktionspartner der formel $M^{\oplus}OH^{\ominus}$, worin $M^{\oplus}$ für ein Alkalimetall- oder Ammoniumkation steht, in ihre wasserlöslichen Salze, bevorzugt ihre Alkalimetallsalze, besonders bevorzugt ihre Natriumsalze, überführt und nach an sich bekannten Methoden aus der Reaktionsmischung isoliert und gereinigt. Dies kann beispielsweise dadurch geschehen, daß man die bei erhöhter Temperatur in der Reaktionsmischung gelösten Reaktionsprodukte durch Abkühlen auskristallisiert oder durch Zugabe eines Lösungsmittels ausfällt, die erhaltenen Niederschläge oder Kristalle durch Abdekantieren der Mutterlauge oder durch Filtration von den gelösten Reaktionspartnern trennt und die Niederschläge bzw. Kristalle anschließend trockt und gegebenenfalls durch Umkristallisieren weiter reingt.

Überraschenderweise wurde außerdem gefunden, daß die gennanten Verbindungen der allgemeinen Formel (III) ausgezeichnete mikrobistatische Wirksamkeit gegenüber zahlreichen Keimen zeigen. Sie lassen sich daher in mikrobistatisch wirksamen Mitteln mit Vorteil verwenden. Dazu werden eine oder mehrere Verbindungen der angegebenen allgemeinen Formel (III), in der $R^1$, $R^2$, $R^3$ und M die oben angegebene Bedeutung haben, bevorzugt in Mengen von 0,1 bis 1 g/l mit üblichen Trägerund Hilfsstoffen zu mikrobistatisch wirksamen Zusammensetzungen formuliert. Besonders gute Wirksamkeit zeigten dabei Zusammensetzungen, die ein oder mehrere Verbindungen der allgemeinen Formel (III) in Konzentrationen von 0,25 bis 1 g/l zusammen mit üblichen Träger- und Hilfsstoffen enthielten, wobei in der allgemeinen Formel (III) $R^3$ für einen geradkettigen oder verzweigten Alkylrest mit 3 bis 6 C-Atomen, $R^3$ und $R^3$ für Methyl und M für ein Alkalimetallkation, bevorzugt ein Natriumion, stehen.

Derartige Zusammensetzungen sind bestens geeignet, das Wachstum zahlreicher grampositiver bzw. gramnegativer Bakterien schon in niedrigen Konzentrationen zu hemmen. Sie weisen dabei eine Hammkonzentration auf, die sie anderen vergleichbaren mikrobistatischen Zusammensetzungen deutlich überlegen macht.

Die Erfindung wird durch die nachfolgenden Beispiele näher erläutert.

## Beispiel 1

0,2 mol 4.4-Dimethyl-3-oxoheptansäurenitril (IV, $R^2 = R^3 = CH_3$, $R^1 = n\text{-}C_3H_7$) wurde in 150 ml Dioxan unter Erwärmen auf 40°C gelöst und 0,2 mol Phosphorige Säure eingetragen. Dann wurde langsam 0,6 mol $PBr_3$ zugetropft und die Reaktionsmischung nach Aufheizen auf 80°C 5 h nachgerührt. Anschließend wurde bei dieser Temperatur mit 1,8 mol Wasser hydrolysiert. Nach 1 h wurden weiter 80 ml Wasser zugegeben, kurz aufgekocht und dann abgekühlt. Der ausgefallene Niederschlag wurde mehrmals mit Wasser, anschließend mit Aceton ausgewaschen und im Vakuum bei 60°C getrocknet. Auf diesem Wege wurden 24,3 g (38,3% d.Th.) 1-Amino-4.4-dimethyl-3-oxo-heptan-1.1-diphosphonsäure ((III), $R^1 = n\text{-}C_3H_7$, $R^2 = R^3 = CH_3$, M = H) isoliert.

Fp.: 176°C (Zers.)

Elementaranalyse (%):

| | | | | |
|---|---|---|---|---|
| Ber.: | C 34,07 | H 6,62 | N 4,42 | P 19,56 |
| Gef.: | C 34,65 | H 6,90 | N 4,50 | P 19,80 |

## Beispiel 2

0,2 Mol 4.4-Dimethyl-3-oxo-decansäurenitril ((IV), $R^1 = n\text{-}C_6H_{13}$, $R^2 = R^3 = CH_3$) wurden analog Beispiel 1 mit Phosphoriger Säure und $PBr_3$ umgesetzt. Zur Vorvollständigung der Umsetzung wurde 7 h nachgerührt, wobei gelb-orangefarbene Zersetzungsprodukte gebildet wurden. Zur Abtrennung dieser Zersetzungsprodukte wurde das Hydrolysat alkalisch eingestellt, filtriert und durch Ansäuren auf einen pH-Wert von 1 mit Salzsäure das Phosphonsäureprodukt ausgefällt. Auf diesem Wege wurden 25,2 g (35,1% d.Th.) 1-Amino-4.4-dimethyl-3-oxo-decan-1.1-diphosphonsäure gewonnen ((III), $R^1 = n\text{-}C_6H_{13}$, $R^2 = R^3 = CH_3$; M = H).

Fp.: 173°C (Zers.)

Elementaranalyse (%):

| | | | | |
|---|---|---|---|---|
| Ber.: | C 40,11 | H 7,52 | N 3,90 | P 17,27 |
| Gef.: | C 40,90 | H 7,75 | N 3,83 | P 17,00 |

Beispiel 3

Die Verbindungen der Beispiele 1 und 2 wurden hinsichtlich ihrer mikrobistatischen Wirksamkeit getestet.

Zur Durchführung des Tests der erfindungemäßen Verbindungen der allgemeinen Formel (III) wurde eine sogenannte "flüssige Hemmreihe" angesetzt. Die mikrobistatische Wirksamkeit der erfindungsgemäßen Verbindungen (III) wurde gegenüber folgenden Testkeimen untersucht:

(1) Staphylococcus aureus;
(2) E. coli;
(3) Pseudomonas aeruginosa;
(4) Streptococcus mutans.

Von den Testkeimen wurde einen Tag von Ansatz der eigentlichen Testreihe eine übernachtkultur angesetzt. Dazu wurde von einer dicht mit Keimen bewachsenen Stelle der Platte mit der Impföse etwas Bakterienmasse abgehoben und in ein mit 10 ml Bouillon gefülltes Reakgenzglas gegeben. Die entsprechenden Reagenzgläser wurden anschleißend bei 37°C 16 bis 18 h lang bebrütet und danach bis zur Beimpfung der Teströhrchen bei 4 bis 0°C gelagert.

Von der zu untersuchenden Substanzen der Beispiele 1 und 2 wurden jeweils folgende Mengen in sterile Erlenmeyerkolben eingewogen:

(a) 0,02 g auf 3 ml Lösungsmittel (siehe unten) entsprechend 5000 ppm und
(b) 0,10 g auf 2 ml Lösungsmittel entsprechend 50 000 ppm.

Anschließend wurden die festen Proben in 4 ml bzw. 2 ml des Lösungsmittels (demineralisiertes Wasser oder entsprechendes organisches Lösungsmittel) gelöst. Man erhielt so Lösungen mit 5000 ppm bzw. 50 000 ppm (siehe oben).

Mit einer automatischen Pipette wurden aus den wie oben beschrieben angesetzten Lösungen die folgenden Volumina in mit 5 ml Bouillon bzw. Würze gefüllte sterile Reagenzgläser übertragen, die mit 5 ml Bouillon bzw. Würze die entsprechend angegebene Konzentration an mikrobistatischem Wirkstoff ergaben:

Von Lösung (a):
10 µl entsprechend einer Konzentration von 10 ppm;
50 µl entsprechend einer Konzentration von 50 ppm und
100 µl entsprechend einer Konzentration von 100 ppm.

Von Lösung (b):
25 µl entsprechend einer Konzentration von 250 ppm;
50 µl entsprechend einer Konzentration von 500 ppm und
100 µl entsprechend einer Konzentration von 1000 ppm.

Derartige Verdünnungsreihen wurden für beide Substanzen (aus Beispiel 1 und Beispiel 2) angesetzt. Die entsprechenden Reagenzgläser wurden danach geschüttelt, um eine gute Durchmischung zu gewährleisten.

Zur Bestimmung der mikrobistatischen Wirksamkeit der Substanzen (III) wurden die Röhrchen jeweils mit einem Tropfen der entsprechenden Keimsuspension beimpft. Als Wachstumskontrolle für alle Testkeime diente ein Röhrchen mit 5 ml Bouillon bzw. Würze ohne Mikrobenzusatz. Die entsprechenden Reagenzgläser wurden 48 h bei 37°C bebrütet.

Die Auswertung erfolgt dadurch, daß in der Verdünnungsreihe abgelesen wurde, bei welcher Verdünnungsstufe der auf mikrobistatische Wirksamkeit zu prüfenden Substanz das Wachstum der Testkeime unterdrückt war, die Bouillon bzw. Würze also klar blieb.

Die nachfolgende Tabelle zeigt die mikrobistatische Wirksamkeit der Substanzen der Beispiele 1 und 2 gegenüber grampositiven Testkeimen (Staphylococcus aureus und Streptococcus mutans) und gramnegativen Testkeimen (Pseudomonas aeruginosa und Escherichia coli). In der Tabelle sind die Hemmkonzentrationen in ppm angegeben.

TABELLE

| | Hemmkonzentrationen (ppm) gegenüber | | | |
|---|---|---|---|---|
| Verb. aus Bsp. | Staph. aureus | Strept. mutans | Pseud. aerugin | E. coli |
| 1 | 500 | 1000 | ./. | 1000 |
| 2 | 250 | 250 | 1000 | ./. |

**Patentansprüche**

1. 3-Alkyl-3-oxo-1-aminopropan-1.1.-diphosphonsäuren und ihre wasserlöslichen Salze der allgemeinen Formel (III)

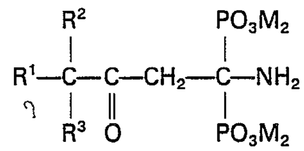

(III)

in der $R^1$ für unverzweigte oder verzweigte Alkylreste mit 1 bis 8 C-Atomen, $R^2$ und $R^3$ unabhängig voneinander für Methyl oder Ethyl und M für oder ein Kation einer wasserlöslichen Base stehen.

2. Verbindungen der allgemeinen Formel (III) nach Anspruch 1, dadurch gekennzeichnet, daß in der allgemeinen Formel (III) $R^1$ für unverzweigte Alkylreste mit 3 bis 6 C-Atomen steht.

3. Verbindungen der allgemeinen Formel (III) nach Ansprüchen 1 und 2, dadurch gekennzeichnet, daß in der allgemeinen Formel (III) beide Reste $R^2$ und $R^3$ gleich sind und für Methyl stehen.

4. Verbindungen der allgemeinen Formel (III) nach Ansprüchen 1 bis 3, dadurch gekennzeichnet daß M für ein Alkalimetallkation, bevorzugt ein Natriumion, oder ein Ammoniumkation der allgemeinen Formel $R^4R^5R^6R^7N^{\oplus}$ steht, in der $R^4$, $R^5$, $R^6$ und $R^7$ unabhängig voneinander Wasserstoff oder ein unverzweigter oder verzweigter Alkylrest mit 1 bis 12 C-Atomen sein können.

5. Verfahren zur Herstellung von 3-Alkyl-3-oxo-1-aminopropan-1.1-diphosphonsäuren und ihren wasserlöslichen Salzen der allgemeinen Formel (III)

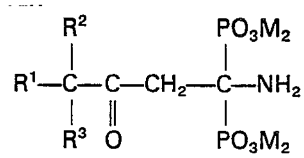

(III)

in der $R^1$ für unverzweigte oder verzweigte Alkylreste mit 1 bis 8 C-Atomen, $R^2$ und $R^3$ unabhängig voneinander für Methyl oder Ethyl und M für H oder ein Kation einer wasserlöslichen Base stehen, dadurch gekennzeichnet, daß man

(a) ein Oxonitril der allgemeinen Formel (IV)

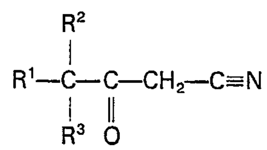

(IV)

in der $R^1$, $R^2$ und $R^3$ die oben angegebenen Bedeutungen haben können, entweder

— mit Mischungen von Phosphortrihalogeniden $PX_3$, in denen X für F, Cl oder Br steht, mit Phosphoriger Säure, wobei das Molverhältnis der Phosphonylierungspartner im Bereich von 2:1 bis 1:2 liegt, oder

— mit Produkten der Umsetzung von Phosphortrihalogeniden $PX_3$ mit Wasser, in denen das Phosphortrihalogenid soweit hydrolysiert ist, daß ein $PX_3$—$H_3PO_3$-Gemisch im Molverhältnis 2:1 bis 1:2 vorliegt, bei Temperaturen im Bereich von 0 bis 100°C, gegebenenfalls in Gegenwart eines oder mehrerer organischer Lösungsmittel, umsetzt,

(b) die Reaktionsmischung mit einem Überschuß Wasser versetzt,

(c) gegebenenfalls die Reaktionsprodukte der allgemeinen Formel (III), in der M für H steht, in an sich bekannter Weise durch Zugabe basischer Reaktionspartner der Formel $M^{\oplus}OH^{\ominus}$, worin $M^{\oplus}$ für ein Alkalimetall- oder Ammoniumkation $R^4R^5R^6R^7N^{\oplus}$ steht, in dem $R^4$, $R^5$, $R^6$ und $R^7$ unabhängig voneinander Wasserstoff oder ein verzweigter oder unverzweigter Alkylrest mit 1 bis 12 C-Atomen sein können, in Verbindungen der Formel (III), überführt, in der M für ein Alkalimetall- oder Ammoniumkation der genannten Bedeutung steht

(d) und die erhaltenen Verbindungen der Formel (III) nach an sich bekannten Methoden isoliert und reinigt.

6. Verfahren nach Anspruch 5, dadurch gekennzeichnet, daß man die Reaktion in Gegenwart eines oder mehrerer organischer Lösungsmittel aus der Gruppe Dioxan, Chlorbenzol, Glykoldimethylether, Tetrachlorkohlenstoff oder Ethantetrachlorid durchführt.

7. Verfahren nach Anspruch 6, dadurch gekennzeichnet, daß man als Lösungsmittel Dioxan verwendet.

8. Verfahren nach Ansprüchen 5 bis 7, dadurch gekennzeichnet, daß man die Reaktion im Temperaturbereich von 45 bis 90°C durchführt.

9. Verfahren nach Ansprüchen 5 bis 8, dadurch gekennzeichnet, daß man eine Mischung aus Phosphortrihalogenid $PX_3$ und Phosphoriger Säure im Molverhältnis 1:1 zur Phosphonylierung verwendet.

10. Verfahren nach Anspruch 9, dadurch gekennzeichnet, daß man als Phosphortrihalogenid $PX_3$ $PBr_3$ verwendet.

11. Verfahren nach Ansprüchen 5 bis 10, dadurch gekennzeichnet, daß man als basischen Reaktionspartner $M^{\oplus}OH^{\ominus}NaOH$ verwendet.

12. Verwendung der Verbindungen der allgemeinen Formel (III) nach Ansprüchen 1 bis 4 in mikrobistatisch wirksamen Mitteln neben üblichen Träger- und Hilfsstoffen.

13. Zusammensetzungen enthaltend eine oder mehrere Verbindungen der allgemeinen Formel (III)

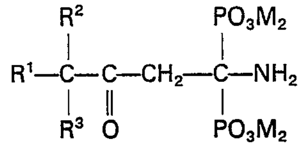

(III)

in der $R^1$ für unverzweigte oder verzweigte Alkylreste mit 1 bis 8 C-Atomen, $R^2$ und $R^3$ unabhängig voneinander für Methyl oder Ethyl und M für H oder das Kation einer wasserlöslichen Base stehen, in mikrobistatisch wirksamen Konzentrationen neben üblichen Träger- und Hilfsstoffen.

14. Zusammensetzungen nach Anspruch 13, enthaltend eine oder mehrere Verbindungen der allgemeinen Formel (III) in der $R^1$, $R^2$, $R^3$ und M die oben angegebenen Bedeutungen haben, in Konzentrationen von 100 bis 1000 ppm neben üblichen Träger- und Hilfsstoffen.

15. Zusammensetzungen nach Anspruch 13, enthaltend ein oder mehrere Verbindungen der allgemeinen Formel (III), in der $R^1$ für einen geradkettigen oder verzweigten Alkylrest mit 3 bis 6 C-Atomen, $R^2$ und $R^3$ für Methyl und M für ein Alkalimetallkation, bevorzugt für ein Natriumion, stehen, in Konzentrationen von 250 bis 1000 ppm neben üblichen Träger- und Hilfstoffen.

**Revendications**

1. Acides 3-alkyl-3-oxo-1-aminopropane-1,1-diphosphoniques et leurs sels hydrosolubles de formule générale (III):

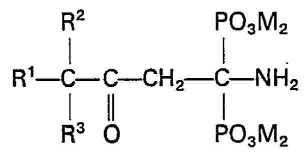

(III)

dans laquelle $R^1$ représente un radical alkyle à chaîne ramifiée ou non contenant 1 à 8 atomes de carbone, $R^2$ et $R^3$ représentent chacun indépendamment l'un de l'autre un groupe méthyle ou un groupe éthyle et M représente H ou un cation d'une base hydrosoluble.

2. Composés de formule générale (III) selon la revendication 1, caractérisés en ce que, dans la formule générale (III), $R^1$ représente un radical alkyle non ramifié contenant 3 à 6 atomes de carbone.

3. Composés de formule générale (III) selon les revendications 1 et 2, caractérisés en ce que, dans la formule générale (III), les deux radicaux $R^2$ et $R^3$ sont indentiques et représentent chacun un radical méthyle.

4. Composés de formule générale (III) selon les revendications 1 à 3, caractérisés en ce que M représente un cation d'un métal alcalin, de préférence, un ion sodium, ou un cation ammonium de formule générale $R^4R^5R^6R^7N^{\oplus}$ dans laquelle $R^4$, $R^5$, $R^6$ et $R^7$ peuvent être indépendamment l'un de l'ature un atome d'hydrogène ou un radical alkyle à chaîne ramifiée ou non contenant 1 à 12 atomes de carbone.

5. Procédé de préparation d'acides 3-alkyl-3-oxo-1-aminopropane-1,1-diphosphoniques et de leurs sels hydrosolubles de formule générale (III):

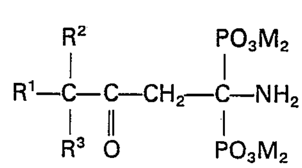

(III)

dans laquelle $R^1$ représente un radical alkyle à chaîne ramifiée ou non contenant 1 à 8 atomes de carbone, $R^2$ et $R^3$ représentent chacun indépendamment l'un de l'autre un groupe méthyle ou un groupe éthyle, tandis que M représente H ou un cation d'une base hydrosoluble, caractérisé en ce que:

(a) on fait réagir un oxonitrile de formule générale (IV):

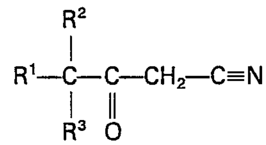

(IV)

dans laquelle $R^1$, $R^2$ et $R^3$ peuvent avoir les significations indiquées ci-dessus, soit

— avec des mélanges de trihalogénures de phosphore $PX_3$ où X représente F, Cl ou Br, avec de l'acide phosphoreux, le rapport molaire des partenaires de phosphonylation se situant dans l'intervalle de 2:1 à 1:2, soit

— avec des produits de la réaction de trihalogénures de phosphore $PX_3$ avec l'eau, où le trihalogénure de phosphore est hydrolysé dans la mesure où l'on obtient un mélange $PX_3$—/$H_3PO_3$ dans le rapport molaire de 2:1 à 1:2,

à des températures se situant dans l'intervalle allant de 0 à 100°C, éventuellement en présence d'un ou de plusieurs solvants organiques,

(b) on ajoute un excès d'eau au mélange réactionnel,

(c) on transforme éventuellement les produits réactionnels de formulé générale (III) dans laquelle M représente H, de façon connue en soi, par addition de partenaires réactionnels basiques de formule $M^{\oplus}OH^{\ominus}$ où $M^{\oplus}$ représente un cation d'un métal alcalin ou un cation ammonium $R^4R^5R^6R^7N^{\oplus}$ où $R^4$, $R^5$, $R^6$ et $R^7$ peuvent être indépendamment l'un de l'autre un atome d'hydrogène ou un radical alkyle ramifié ou non contenant 1 à 12 atomes de carbone, en composés de formule (III) dans laquelle M représente un cation d'un métal alcalin ou d'ammonium ayant la signification mentionnée,

(d) et l'on isole et purifie les composés obtenus de formule (III) selon des méthodes connues en soi.

6. Procédé selon la revendication 5, caractérisé en ce qu'on effectue la réaction en présence d'un ou de plusieurs solvants organiques choisis parmi le groupe comprenant la dioxanne, le chlorobenzène, l'éther diméthylique de glycol, le tétrachlorure de carbone ou le tétrachlorure d'éthane.

7. Procédé selon la revendication 6, caractérisé en ce que, comme solvant, on emploie le dioxanne.

8. Procédé selon les revendications 5 à 7, caractérisé en ce qu'on effectue la réaction à une température se situant dans l'intervalle allant de 45 à 90°C.

9. Procédé selon les revendications 5 à 8, caractérisé en ce qu'on utilise un mélange d'un trihalogénure de phosphore $PX_3$ et d'acide phosphoreux dans le rapport molaire de 1:1 pour la phosphonylation.

10. Procédé selon la revendication 9, caractérisé en ce que, comme trihalogénure de phosphore, on utilise $PX_3$ $PBr_3$.

11. Procédé selon les revendications 5 à 10, caractérisé en ce que, comme partenaire réactionnel basique, on utilise $M^{\oplus}OH^{\ominus}NaOH$.

12. Utilisation des composés de formule générale (III) selon les revendications 1 à 4 dans des agents à activité microbistatique en plus des substances auxiliaires et des supports habituels.

13. Compositions contenant un ou plusieurs composés de formule générale (III):

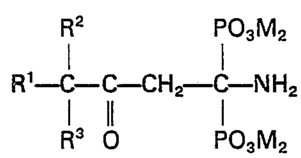

(III)

dans laquelle $R^1$ représente un radical alkyle ramifié ou non contenant 1 à 8 atomes de carbone, $R^2$ et $R^3$ représentent chacun indépendamment l'un de l'autre un groupe méthyle ou un groupe éthyle, tandis que M représente H ou le cation d'une base hydrosoluble, en concentrations à activité microbistatique en plus des substances auxiliaires et des supports habituels.

14. Composition selon la revendication 13, contenant un ou plusieurs composés de formule générale (III) dans laquelle $R^1$, $R^2$, $R^3$ et M ont les significations indiquées ci-dessus, en concentrations de 100 à 1.000 parties par million en plus des substances auxiliaires et des supports habituels.

15. Compositions selon la revendication 13, contenant un ou plusieurs composés de formule générale (III) dans laquelle $R^1$ représente un radical alkyle à chaîne droite ou ramifiée contenant 3 à 6 atomes de carbone, $R^2$ et $R^3$ représentent chacun un radical méthyle et M représente un cation d'un métal alcalin, de préférence, un ion sodium, en concentrations de 250 à 1.000 parties per million en plus de substances auxiliaires et des supports habituels.

## Claims

1. 3-alkyl-3-oxo-1-aminopropane-1,1-diphosphonic acids and water-soluble salts thereof corresponding to the following general formula

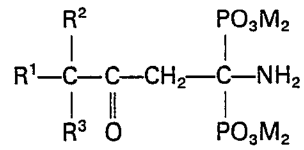

(III)

in which $R^1$ represents unbranched or branched $C_1$—$C_8$ alkyl groups, $R^2$ and $R^3$ independently of one another represent methyl or ethyl and M represents H or a cation of a water-soluble base.

2. Compounds corresponding to general formula (III) as claimed in Claim 1, characterised in that, in general formula (III), $R^1$ represents unbranched $C_3$—$C_6$ alkyl groups.

3. Compounds corresponding to general formula (III) as claimed in Claims 1 and 2, characterised in that, in general formula (III), the two substituents $R^2$ and $R^3$ are the same and represent methyl.

4. Compounds corresponding to general formula (III) as claimed in Claims 1 to 3, characterised in that M is an alkali metal cation, preferably a sodium ion, or an ammonium cation corresponding to the general formula $R^4R^5R^6R^7N^{\oplus}$, in which $R^4$, $R^5$, $R^6$ and $R^7$ independently of one another may represent hydrogen or an unbranched or branched $C_1$—$C_{12}$ alkyl group.

5. A process for the preparation of 3-alkyl-3-oxo-1-aminopropane-1,1-diphosphonic acids and water-soluble salts thereof corresponding to the following general formula

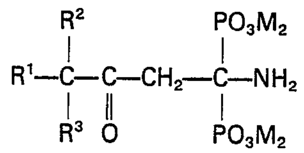

(III)

in which $R^1$ represents unbranched or branched $C_1$—$C_8$ alkyl groups, $R^2$ and $R^3$ independently of one another represent methyl or ethyl and M represents H or a cation of a water-soluble base, characterized in that

(a) an oxonitrile corresponding to the following general formula

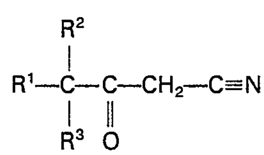

(IV)

in which $R^1$, $R^2$ and $R^3$ may have the meanings defined above, is reacted either

— with mixtures of phosphorus trihalides $PX_3$, where X represents F, Cl or Br, with phosphorous acid, the molar ratio of the phosphonylation reactants being from 2:1 to 1:2, or

— with products of the reaction of phosphorus trihalides $PX_3$ with water, in which the phosphorus trihalide is hydrolyzed to such an extent that a $PX_3/H_3PO_3$-mixture in a molar ratio of 2:1 to 1:2 is present, at temperatures of from 0 to 100°C, optionally in the presence of one or more organic solvents,

(b) an excess of water is added to the reaction mixture,

(c) the reaction products corresponding to general formula (III), in which M represents H, are optionally converted in known manner into compounds corresponding to formula (III), in which M is an alkali metal or ammonium cation as defined above, by addition of basic reactants corresponding to the formula $M^{\oplus}OH^{\ominus}$, where $M^{\oplus}$ is an alkali metal or ammonium cation $R^4R^5R^6R^7N^{\oplus}$, where $R^4$, $R^5$, $R^6$ and $R^7$ independently of one another may represent hydrogen or a branched or unbranched $C_1$—$C_{12}$ alkyl group,

(d) and the resulting compounds corresponding to formula (III) are isolated and purified by methods known per se.

6. A process as claimed in Claim 5, characterized in that the reaction is carried out in the presence of one or more organic solvents from the group comprising dioxane, chlorobenzene, glycol dimethylether, carbon tetrachloride or ethane tetrachloride.

7. A process as claimed in Claim 6, characterized in that dioxane is used as the solvent.

8. A process as claimed in Claims 5 to 7, characterized in that the reaction is carried out at a temperature in the range of from 45 to 90°C.

9. A process as claimed in Claims 5 to 8, characterized in that a mixture of phosphorus trihalide $PX_3$ and phosphorous acid in a molar ratio of 1:1 is used for phosphonylation.

10. A process as claimed in Claim 9, characterized in that $PBr_3$ is used as the phosphorus trihalide $PX_3$.

11. A process as claimed in Claims 5 to 10, characterized in that NaOH is used as the basic reactant $M^{\oplus}OH^{\ominus}$.

12. The use of the compounds corresponding to general formula (III) claimed in Claims 1 to 4, in addition to standard carriers and auxiliaries, in microbistatic compositions.

13. Compositions containing one or more compounds corresponding to the following general formula

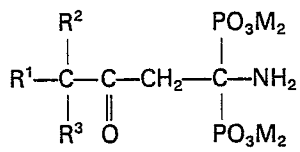

(III)

in which $R^1$ represents unbranched or branched $C_1$—$C_8$ alkyl groups, $R^2$ and $R^3$ independently of one another represent methyl or ethyl and M represents H or the cation of a water-soluble base, in microbistatically active concentrations in addition to standard carriers and auxiliaries.

14. Compositions as claimed in Claim 13 containing one or more compounds corresponding to general formula (III), in which $R^1$, $R^2$, $R^3$ and M are as defined above, in concentrations of from 10 to 1000 ppm in addition to standard carriers and auxiliaries.

15. Compositions as claimed in Claim 13 containing one or more compounds corresponding to general formula (III), in which $R^1$ represents a straight-chain or branched $C_3$—$C_6$ alkyl group, $R^2$ and $R^3$ represent methyl and M represents an alkali metal cation, preferably a sodium ion, in concentrations of from 250 to 1000 ppm in addition to standard carriers and auxiliaries.